# EUROPEAN PATENT SPECIFICATION

(11) **EP 1 148 986 B1**
(45) Date of publication and mention of the grant of the patent: **18.06.2003**
(21) Application number: 99903369.9
(22) Date of filing: 26.01.1999
(51) Int. Cl.: B29C 47/02, B29D 30/70, B60C 9/18

(54) **TIRE MANUFACTURING USING A ROLL FORMING APPARATUS**
REIFENHERSTELLUNG MITTELS EINER PROFILWALZENEINRICHTUNG
PRODUCTION DE PNEUS AU MOYEN D'UN DISPOSITIF DE LAMINAGE

(43) Date of publication of application: 31.10.2001
(73) Proprietor: THE GOODYEAR TIRE & RUBBER COMPANY, Akron, Ohio 44316-0001 (US)
(72) Inventor: SMITH, Michael, Wallace, Mogodore, OH 44260 (US); DZURKO, Michael, Raymond, Massillon, OH 44646 (US); MARKS, Patrick, David, Uniontown, OH 44685 (US); HEAD, William, James, Ravenna, OH 44266 (US)
(74) Representative: Leitz, Paul
(86) International application number: US9901538
(87) International publication number: WO00044547

(56) References cited:
- EP-A- 0 724 951
- FR-A- 2 348 067
- US-A- 3 799 233
- US-A- 4 090 835
- US-A- 4 425 953

## Description

### TECHNICAL FIELD

This invention relates to the building of pneumatic tires. More particularly it relates to a step in the construction of a belted radial ply pneumatic tire wherein three or more cord reinforced belts are positioned between a tire carcass and a tire tread, and wherein wedges of uncured rubber are applied along the edges of at least one of the intermediate belts to reduce ply separation between the edges of adjacent belts.

### BACKGROUND OF THE INVENTION

The construction of a radial ply tire involves the fabrication of a tire carcass with bead rings and sidewalls on a cylindrical drum followed by forming the carcass into toroidal shape. One or more reinforced belts are wrapped sequentially around the outer circumference of the carcass after which a tread is applied to the carcass on top of the reinforced belt or belts. The 'green' or uncured tire is then transferred to a tire mold where it is formed under pressure into a final shape and then cured or vulcanized.

Each reinforced belt is made from a plurality of closely spaced cords embedded in uncured rubber, the cords extending at an angle of about 18° to 26° with respect to the equatorial plane of the tire. When two belts are used, the cord angles are equal but aligned in opposite directions with respect to the equatorial plane. Inasmuch as the cords are not parallel to the equatorial plane, the ends of the cords are exposed along the edges of the belts. The cords used in belts may comprise nylon, polyester, rayon, cotton, aramid or steel.

The exposed cord ends along the edges of the belts create discontinuities which can potentially cause problems such as ply separations, air entrapment and other irregularities in a finished tire. The previously mentioned potential problems are more likely to occur when steel cords are used for the belt reinforcement. Conventionally, a good adhesive bond between rubber and steel is achieved by plating the steel with brass, the latter forming a secure bond with the rubber. Problems arise, however, when the cut ends of the steel cords terminate along the edge of the belt because these ends are not plated. Thus, separation between the rubber and the ends of the steel cord is more likely to occur, thereby giving rise to one or more of the aforementioned problems.

In the construction of light and intermediate-duty tires, such as truck tires, three or four belts may be placed between the tire carcass and the tread. When a tire having three or four belts rolls along the ground, the cord angle in each belt has a tendency to change as the belt moves through the tire footprint (the contact area between the tire tread of the moving tire and the surface on which it is rolling). The cord shift is most pronounced in the middle belt or belts. Thus, when three belts are used in the tire construction, the shift is noted mostly between the 1^{st} and 2^{nd} belt. When four belts are used, the change in cord angle is most pronounced between the 2^{nd} and 3^{rd} belts because the latter adjacent belts have cords at opposite angles. This shift in cord angle can cause the reinforcing cords in the belt to pull loose from the rubber in which the cords are encapsulated.

One solution to these potential problems is to embed each edge of the middle or intermediate belt or belts in a wedge-shaped strip of uncured rubber. The rubber wedge is typically prepared by extrusion of a continuous length of uncured rubber at a location remote from the tire building operation. The extruded rubber wedge is cooled and rolled onto a storage spool with an intermediate plastic sheet serving as a barrier between adjacent folds of the wedge. The diameter of the storage spool is substantially less than the outer diameter of the tire carcass around which the wedge is eventually wrapped. The wedge is later unrolled and two strips of the wedge are applied separately to the edges of a belt to embed the exposed cord ends. This additional manufacturing step adds to the labor and expense of building a pneumatic tire.

The rolled wedge on the storage spool begins to age or cure in storage and thereby decreases its ability to bond to and encapsulate the edges of the belts. Furthermore, the wedge begins to degrade as it develops wrinkles, internal stresses, folds and deformation while stored on the spool. Due to the relatively small size of the wedge, it does not lend itself to being hauled with automatic pick-up and application equipment. Also, the tail end of the wedge must be re-aligned on the belt and manually spliced to the front end of the wedge during application. Furthermore, the wedge being stretched and compressed during application to the belt, creates a non-uniform gage or spacing between the edges of one belt and the next adjacent belt above or below it, thereby contributing to non-uniformities within the tire.

The direct extrusion of a cushion gum strip on to a rotating tire carcass in retreading operations has previously been described in various prior art patent such as U.S. Patent No. 5,162,070 and U.S. Patent No. 5,458,727.

The placement of uncured, wedge-shaped strips directly to a tire carcass during the fabrication of a new tire is shown in U.S. Patent No. 4,283,241. The wedge strips are associated with the formation of the sidewalls of the tire and are not used to embed the ends of the belts beneath the tire tread.

U.S. Patent No. 2,649,134 describes the application of a protective neoprene cover over the sidewall of a tire, preferably by calendering a thin layer of neoprene stock in heated condition on to the sidewall and firmly pressing them together.

None of these prior art references are directed at the aforementioned problems associated with the use of wedge strips along the edges of the belts in new tire construction.

### OBJECTS AND SUMMARY OF THE INVENTION

It is an object of the present invention to provide a method for making a belt assembly from a cord reinforced belt and wedges of uncured rubber for use in the construction of pneumatic tires as defined in one or more of the appended claims and as such having the capability of accomplishing one or more of the following subsidiary objects.

Another object of the present invention is to provide a method for improving the uniformity and repeatability of producing light to intermediate duty truck tires; Yet another object of the present invention is to improve the rate of manufacture of reinforced belt assemblies for pneumatic tires, while at the same time reducing the labor time and expense of this procedure.

Still another object of the present invention is to provide a technique for decreasing the rate of failure along the side edges of the intermediate belt or belts in light and intermediate duty truck tires.

These and other objects which will become readily apparent from the following description are achieved in the manner to be hereinafter described.

The present invention relates to a method for constructing a cord reinforced belt assembly used in the construction of a pneumatic tire, comprising the steps of extruding at least one, and preferably two wedges of uncured rubber, preferably gum rubber; depositing one wedge of uncured rubber along each side edge of a length of belt reinforced with cords of metal such as brass plated steel, or of fibers of nylon, rayon, cotton, aramid or polyester; roll forming the wedges of rubber along the side edges of the reinforced belt material to embed each side edge in rubber wedge, and cutting the belt and the wedges to form a belt assembly having two ends. The wedges are extruded and then roll formed on to the edges of the belt at a temperature of between 77°C and 115°C. The reinforcing cords in the belt material form an angle of between 18° and 26°, and preferably between 21° and 23° with respect to the equatorial plane of the tire. The tire preferably has a belt assembly that contains three or four reinforced belts with one of the intermediate belt or belts roll formed with the wedges of the invention. In a tire having four reinforced belts, the cords in the second belt are disposed at a cord angle which is equal and opposite to the cord angle in the third belt, with respect to the equatorial plane of the tire and the wedges are provided between the second and third belt.

Another aspect of the invention relates to a method for applying at least four reinforcing belts onto a toroidal tire carcass. The method comprises the steps of: extruding a pair of uncured elastomeric wedges; depositing one of the elastomeric wedges along each side edge of a length of cord reinforced belt material; roll forming the elastomeric wedges and side edges to embed each side edge of the belt into one of the wedges; cutting the belt to a length equal to the circumference of the carcass; and wrapping the belt with the elastomeric wedges around the carcass so that the wedges are between the second and third belts. The wedges are extruded and roll formed at a temperature in the range of between 77°C and 115°C and at pressures of between 1400 and 2200 psi (9653 and 15170 kPa). The belts preferably are reinforced with steel cords, typically plated with brass or with cords of a suitable natural or synthetic material such as nylon, polyester, cotton, rayon or aramid.

Other objects, features and advantages of the invention will become apparent to those skilled in the art to which it pertains upon a reading and understanding of the following detailed description.

### BRIEF DESCRIPTION OF THE DRAWINGS

The structure, operation and advantages of the invention will become further apparent upon consideration of the following description taken in conjunction with the accompanying drawings wherein:
**Figure 1** is a schematic diagram showing the steps of forming and delivering a belt assembly to a tire building drum;
**Figure 2** is a perspective cross sectional end view of a belt assembly constructed on a conveyer belt in accordance with the present invention;
**Figure 3** is a partial cross-sectional view of a toroidal tire carcass showing a first reinforced belt positioned thereon;
**Figure 4** is a partial cross-sectional view of the tire carcass shown in **Figure 3** with an additional first reinforced belt assembly;
**Figure 5** is a partial cross-sectional view of the carcass shown in **Figure 4** with an additional second reinforced belt assembly; and
**Figure 6** is a partial cross-sectional view of a portion of a cured tire with two reinforced belt assemblies between two reinforced outer belts.

### DEFINITIONS

For purposes of the detailed description, the following terms shall have the definitions set beside them unless clearly contraindicated elsewhere in the text.
"Belt" means at least a ply of parallel cords underlying the tread and having cord angles which are nearly parallel with respect to the equatorial plane of the tire.
"Casing" means the tire apart from the tread and belts, and including the beads.
"Footprint" means the contact area of the tire tread with a flat surface at zero speed and under normal load pressure.
"Radial direction" means the direction radially toward or away from the axis of rotation of a tire.
"Reinforcing cords" means cords made from natural or synthetic fibers such as
cotton, rayon, polyester, nylon or aramid, or from steel or other metal wires or filaments which are braided, twisted or woven together.
"Splice" means a joint formed between two ends of a belt, a belt assembly or a tread to form a continuous loop or circle.
"Tread" means the portion of the tire radially outside of the carcass for rolling contact with the surface of a road.
"Wedge strip" means a generally triangular cross sectional rubber strip which fills the spaces between the side edges of adjacent reinforcement belts and which embeds the side edges of the belts.

### DETAILED DESCRIPTION OF THE INVENTION

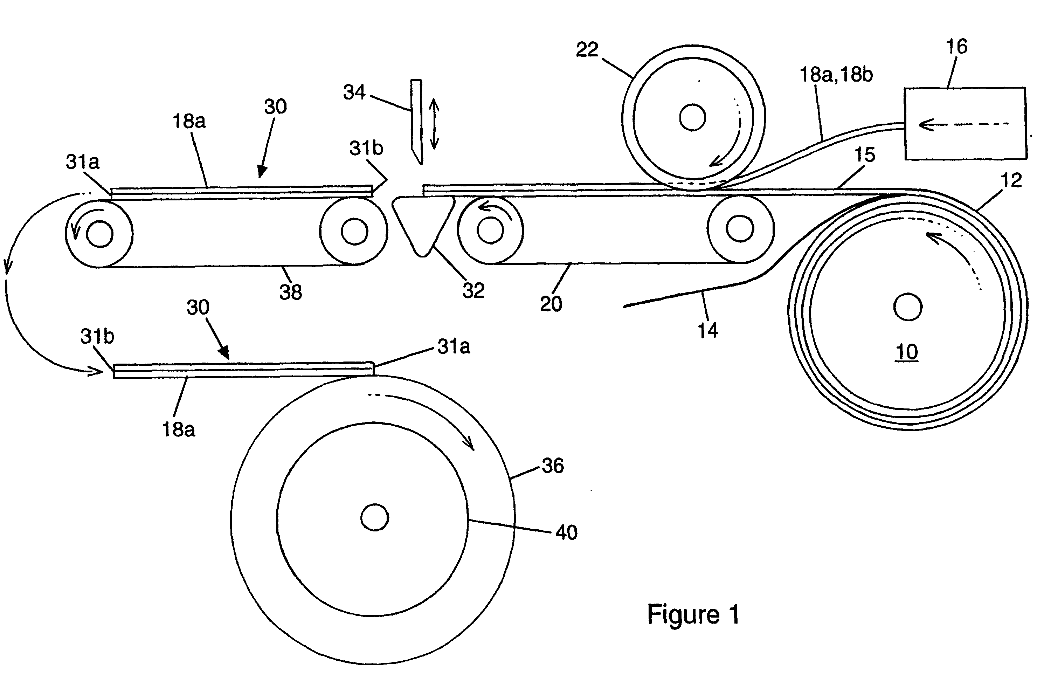

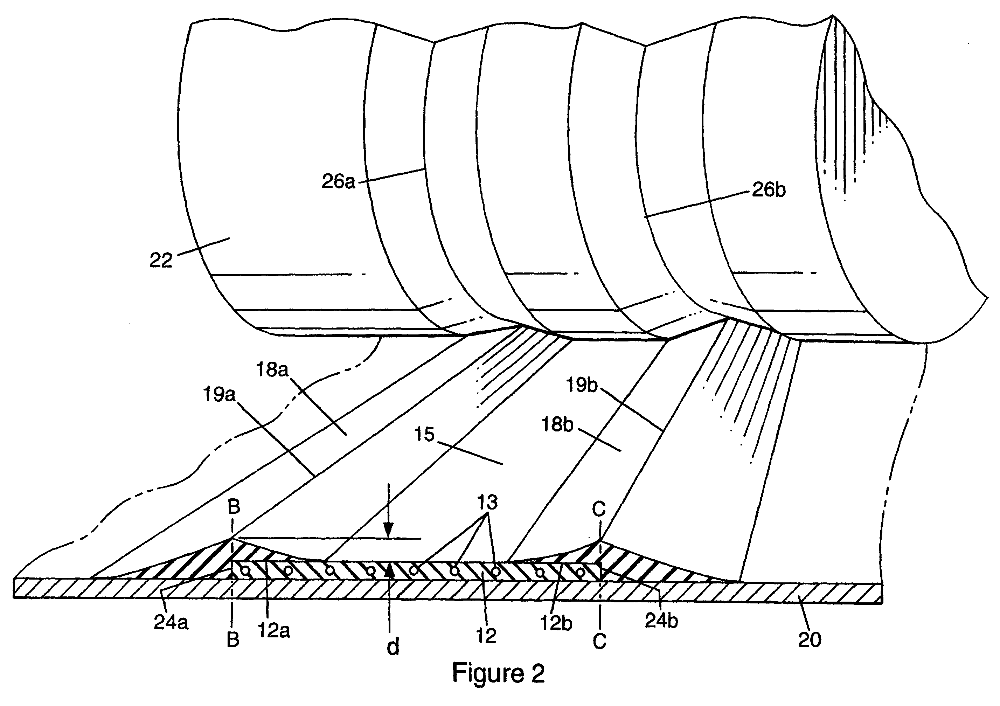

**Figure 1** is a schematic diagram which shows the operative steps of practicing the present invention. A spool **10** has a roll of reinforced belt material **12** coiled thereon. An inner liner **14** of a suitable nonstick material such as polyethylene separates each layer of the belt material from the next layer. An extruder or pair of extruders **16** (one of which is shown) extrude substantially identical wedges **18a,18b** of gum rubber. The wedges **18a,18b** are extruded with a triangular cross-section and each deposited along one side edge **24a,24b,** respectively of the belt material **12** as the latter is laid down on a conveyor belt **20.** A cylindrical roll former **22** presses the wedges **18a,18b** and the belt material **12** together so that the side edges **24a,24b** of the belt material is embedded into the wedge material. The belt material, being relatively stiff as compared with the wedge material, displaces a section of the wedge as shown in **Figure 2.**

As shown in **Figure 2,** each of the two wedges **18a,18b** is pressed into one edge **24a,24b,** respectively, of the belt material by roll former **22.** The roll former **22** has spaced, V-shaped grooves **26a,26b** around the circumference of the cylindrical roll former. The cross-sectional area of each V-shaped groove is equal to the cross-sectional area of the wedges **18a,18b,** respectively. For a typical medium radial truck (MRT) tire, the cross-section area is approximately 0.131 square inches (0.7452 cm²).

An important aspect of the invention is that the roll former presses and embeds the exposed ends of the reinforcing cords **13** into the uncured rubber of the wedge strips **18a,18b.** This tends to prevent any discontinuities between the cord ends and the rubber along the edges of the belt. Another important feature of the present invention relates to the use of the wedges to accurately produce a uniform thickness or gauge of gum rubber at the edges of the belt. This can be accomplished by locating the vertexes **19a,19b** of wedges **18a,18b** directly above the edge **24a,24b,** respectively so that straight lines B-B and C-C pass along the edges **24a,24b** and through the vertexes **19a,19b,** respectively. Further, the gauge "d" is measured from the top surface **15** of the belt material **12** to the vertex **19a,19b.** While a vertex is illustrated it is also within the terms of the present invention to provide a flat surface instead of the vertex. The flat surface would also be located a distance "d" from the top surface **15** of the belt material **12.** Maintaining a constant gauge is very important because failure to do so creates a location where heat build and separation problems arise. Accordingly, the precise application of the wedge contributes to improved tire uniformity by eliminating variations in thickness between adjacent belts.

Referring again to **Figure 1,** the belt material **12** and wedges **18a,18b** are assembled by the roll former **22** with the side edges **24a,24b** of the belt material pressed into and encapsulated within the uncured rubber of the wedges **18a, 18b.** The end sections **12a,12b** of the top surface **15** of belt material **12** are covered with wedges **18a,18b.** After the belt material **12** and the wedges **18a,18b** are roll formed together, the resultant belt assembly is passed over anvil **32** wherein the continuous length of belt material is cut into discrete belt assemblies **30** with a conventional cutter **34.** Each belt assembly **30** is cut to a length which is precisely equal to the circumference of the toroidal carcass **36** around which the belt is to be wrapped. Further, the belt material is typically cut along the length of the cords at an angle determined by the specific design of the tire. The belt assembly **30** is transported on a second conveyor **38** to a tire building drum **40** of conventional design. Then the belt assembly **30** is wrapped around the toroidal tire carcass with the wedges **18a,18b** positioned radially on the inside of the belt in contact with a belt immediately therebeneath, which had been previously wrapped around the tire casing **36.**

As previously noted, the teachings of the present invention are intended to be used with one or more intermediate belt assemblies on tires such as MRT tires having three or four reinforcement belts. In other words, if the tire contains three belts, the wedge strips are applied along the side edges of the second belt to form a second belt assembly. If the tire contains four belts, the wedge strips are applied to the third belt to form a third belt assembly including a belt with wedge strips along the side edges. The second and third belts have been found to undergo a greater amount of cord angle shift as the belts pass through the footprint than the innermost or outermost reinforcement belts because the cords of the second and third reinforcement belts are at opposing angles to one another.

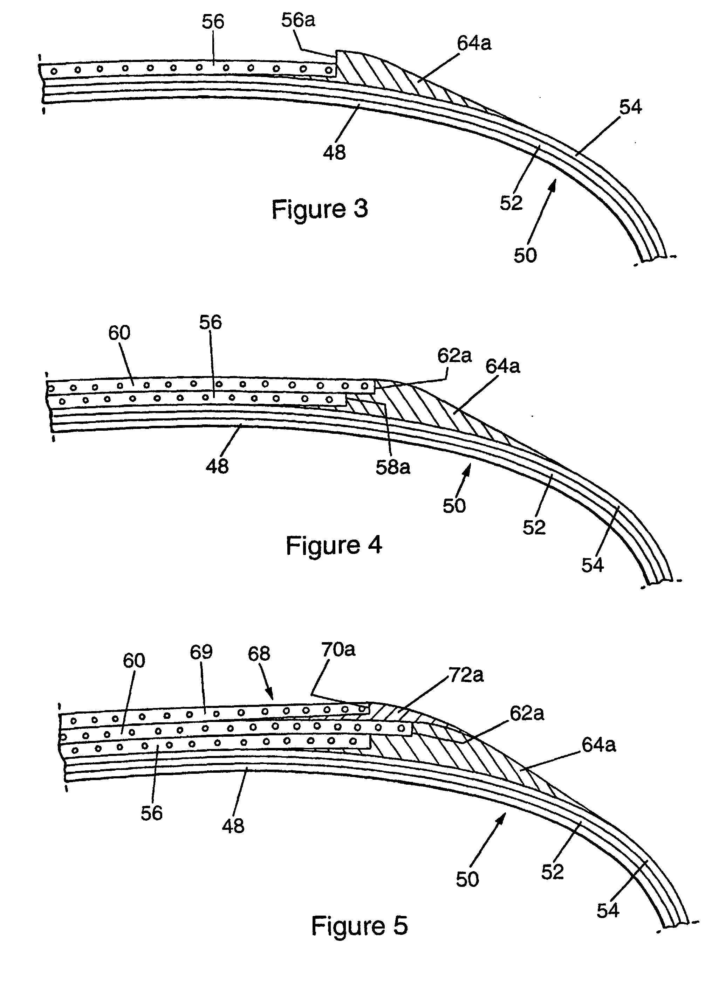

**Figures 3** through **5** show the arrangement of the first three belts in the construction of a truck tire having four reinforcing belts. The tire comprises a tire casing **50** composed of an inner carcass ply **52** and an outer carcass ply **54,** both of which are reinforced by cords of nylon, rayon, polyesters or aramid. A liner **48** of rubber such as halobutyl, which is highly impermeable to the passage of air is on the inside of the carcass **50.** The cord angle of the reinforcement cords in the carcass plies are approximately in a radial plane, that is, generally parallel to the tire axis about which the tire rotates. A tire of this construction is conventionally named a radial ply tire.

As shown in **Figure 3,** the first reinforcement belt **56** on the outer carcass ply **54** does not include a wedge **18a,18b** along the edges **58a,58b** of the belt.
Throughout **Figures 3-6** only one side (designated as **a**) is shown since the other side (designated as **b)** is substantially identical. A shoulder wedge **64a,64b** is conventionally located at either side of first belt **56** between carcass **50** and belt **56,** and provides a platform for the placement of the belts during the building of the tire. The tackiness of the first belt **56** and the uncured carcass **50** keeps the first belt adhered to the tire carcass **50** during this stage of the tire building process.

**Figure 4** shows a second reinforcement belt **60** disposed on top surface of the first belt **56** with the edges **62a,62b** of the second belt **60** extending beyond the edges **58a,58b** of the first belt. The edges **62a,62b** of belt **60** are pressed into the shoulder wedges 64a,64b substantially as shown. After the second belt **60** is wrapped around the first belt **56,** the ends (not shown) are spliced together using conventional stitching rollers (not shown).

**Figure 5** shows a belt and wedge assembly **68,** substantially identical to the belt assembly **30,** as described before with regard to belt **12** and wedges **18a,18b,** and shown in **Figures 1** and **2,** wrapped around the second belt **60** with the edges **70a,70b** of the third belt **69** embedded in a second wedge **72a,72b,** respectively, to form belt and wedge assembly **68.** The ends of the third belt **69** and the wedges **72a,72b** are stitched to tightly adhere them together, as described before. The third belt assembly **68** is applied to the second belt **60** with wedge strips **72a,72b** disposed to space the ends **70a,70b** of third belt **69** a specified gauge distance from ends **62a,62b** of second belt **60.** Note that the wedges **72a,72b (72b** not shown) are positioned against the second belt **60** to keep the edges **62a,62b,70a,70b** of the two "working belts" **60** and **69,** respectively, from contacting each other. The working belts **60** and **69** are applied so that their cords have equal angles with respect to the equatorial plane throughout the tire, but the cords are aligned so that the cord angles are in opposite directions to each other. The wedges **72a,72b** ensure that the spacing between the edges **62a,62b** of the second belt assembly **60** and the edges **70a,70b** of belt assembly **68** is desirably maintained at a predetermined uniform distance of 0.110 inches (0.125 cm) to 0.112 inches (0.130cm).

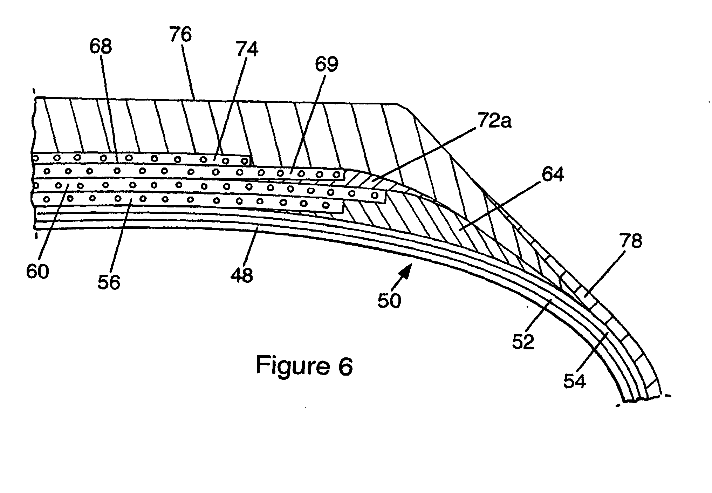

**Figure 6** shows a partial cross section of a completed tire with four reinforcement belts **56,60,68,74.** The fourth belt **74** is applied on top of the third belt **68** and a tread **76** is placed radially outward from the fourth belt. Also, sidewalls **78** are provided as is conventionally known in the tire construction art. In a conventional manner, the entire structure is placed in a tire mold where the tire is cured at elevated temperatures causing the rubber to flow and fill any voids created during the tire building process, and to become vulcanized or cured into an integral unit.

By using the method and device of the present invention, the uniformity of the resultant tire can be improved while decreasing the incident of failure due to ply and belt separations caused by changes in the cord angles of the reinforcing cords in the intermediate belts located beneath the tread portion of the tire. Furthermore, the production rate for radial medium truck tires can be increased by utilizing the teachings of the present invention.

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the spirit and scope of the appended claims.

## Claims

1. A method for constructing a cord reinforced belt assembly **(30)** used in the construction of a pneumatic tire, comprising the steps of:
a) extruding a first wedge **(18a)** of uncured rubber;
b) depositing the first wedge **(18a)** of uncured rubber along a first side edge **(24a)** on a first surface **(15)** of a cord reinforced belt **(12),** said first surface **(15)** having first **(12a)** and second laterally spaced end sections **(12b);** and
c) roll forming the first wedge **(18a)** of uncured rubber along the first side edge **(24a)** of the belt **(12)** to embed the side edge **(24a)** and a first end section **(12a)** of the first surface **(15)** of the belt **(12)** in the uncured rubber of the first wedge **(18a).**

2. The method of claim 1 including the steps of :
d) extruding a second wedge **(18b)** of uncured rubber;
e) depositing the second wedge along a second side edge **(24b)** on said first surface **(15)** of the cord reinforced belt **(12);** and
f) roll forming the second wedge **(18b)** of uncured rubber along the second side edge **(24b)** of the belt **(12)** to embed the second side edge **(24b)** and a second end section **(12b)** of the first surface **(15)** of the belt in the uncured rubber of the second wedge **(18b).**

3. The method of claim 2 including the step of cutting the belt material **(12)** and the first and second wedges **(18a,18b)** to form a belt assembly **(30)** having two ends **(31a, 31b).**

4. The method of claim 3 including the steps of :
extruding the first and second wedges **(18a,18b)** of uncured rubber directly onto the belt **(12);** and
roll forming the first and second wedges **(18a,18b)** on to the first and second side edges **(24a,24b)** of the belt **(12)** at a temperature of between 77°C and 115°C.

5. The method of claim 1 including the step of selecting the reinforcing cords (13) from the group consisting of steel cord, brass plated steel cords and cords of natural or synthetic material.

6. A method of constructing a pneumatic tire comprising the steps of:
a) wrapping a first reinforcing belt **(56)** around the tire carcass **(50) ;**
b) wrapping a second reinforcing belt **(60)** having cords at a first angle with respect to the equatorial plane of the tire carcass;
c) constructing according to the method of claim 2 a first belt assembly **(68)** including a third reinforced belt **(69)** with the side edges **(70a,70b)** and the laterally spaced end sections of one of its surfaces embedded into elastomeric wedges **(72a,72b)**; and
d) wrapping the first belt assembly **(68)** around the second reinforcing belt **(60)** with the elastomeric wedges **(72a,72b)** positioned radially inwardly from the first belt assembly against the second belt **(60)** to space side edges **(62a,62b)** of the second belt **(60)** from the side edges **(70a,70b)**, respectively, of the third belt **(69)**.

7. The method of claim 6 including the step of selecting first, second and third reinforcing belts **(56,60,69)** with an angle of the reinforcing cords **(13)** in the belt between 18° and 26° with respect to the equatorial plane of the tire.

8. The method of claim 6 including the step of extruding and roll forming the wedges **(72a,72b)** at a temperature in the range of between 77°C and 115°C and at a pressure of between 9.650 and 15.170 kPa (1400 psi and 2200 psi).

## Patentansprüche

1. Verfahren zum Aufbauen einer kordverstärkten Gürtelbaueinheit (30), die beim Aufbau eines Luftreifens verwendet wird, das die folgenden Schritte umfasst:
a) Spritzen eines ersten Keils (18a) aus unvulkanisiertem Gummi;
b) Auflegen des ersten Keils (18a) aus unvulkanisiertem Gummi entlang einer ersten Seitenkante (24a) auf eine erste Oberfläche (15) eines kordverstärkten Gürtels (12), wobei die erste Oberfläche (15) erste (12a) und zweite (12b) seitlich beabstandete Endabschnitte aufweist; und
c) Profilwalzen des ersten Keils (18a) aus unvulkanisiertem Gummi entlang der ersten Seitenkante (24a) des Gürtels (12), um die Seitenkante (24a) und einen ersten Endabschnitt (12a) der ersten Oberfläche (15) des Gürtels (12) im unvulkanisierten Gummi des ersten Keils (18a) einzubetten.

2. Verfahren nach Anspruch 1, das die folgenden Schritte umfasst:
d) Spritzen eines zweiten Keils (18b) aus unvulkanisiertem Gummi;
e) Auflegen des zweiten Keils entlang einer zweiten Seitenkante (24b) auf die erste Oberfläche (15) des kordverstärkten Gürtels (12); und
f) Profilwalzen des zweiten Keils (18b) aus unvulkanisiertem Gummi entlang der zweiten Seitenkante (24b) des Gürtels (12), um die zweite Seitenkante (24b) und einen zweiten Endabschnitt (12b) der ersten Oberfläche (15) des Gürtels im unvulkanisierten Gummi des zweiten Keils (18b) einzubetten.

3. Verfahren nach Anspruch 2, das den Schritt umfasst, bei dem das Gürtelmaterial (12) und die ersten und zweiten Keile (18a, 18b) so zugeschnitten werden, dass eine Gürtelbaueinheit (30) mit zwei Enden (31a, 31b) gebildet wird.

4. Verfahren nach Anspruch 3, das die Schritte umfasst:
Spritzen der ersten und zweiten Keile (18a, 18b) aus unvulkanisiertem Gummi direkt auf den Gürtel (12); und
Profilwalzen der ersten und zweiten Keile (18a, 18b) auf die ersten und zweiten Seitenkanten (24a, 24b) des Gürtels (12) bei einer Temperatur im Bereich von 77 °C bis 115 °C.

5. Verfahren nach Anspruch 1, das den Schritt umfasst, bei dem die Verstärkungskorde (13) aus der Gruppe gewählt werden, die aus Stahlkord, messingüberzogenen Stahlkorden und Korden aus natürlichem oder synthetischem Material besteht.

6. Verfahren zum Aufbauen eines Luftreifens, das die folgenden Schritte umfasst:
a) Wickeln eines ersten Verstärkungsgürtels (56) um die Reifenkarkasse (50);
b) Wickeln eines zweiten Verstärkungsgürtels (60), der Korde unter einem ersten Winkel in Bezug auf die Äquatorialebene der Reifenkarkasse aufweist;
c) Aufbauen einer ersten Gürtelbaueinheit (68) gemäß dem Verfahren nach Anspruch 2, die einen dritten Verstärkungsgürtel (69) umfasst, wobei die Seitenkanten (70a, 70b) und die seitlich beabstandeten Endabschnitte einer seiner Oberflächen in elastomere Keile (72a, 72b) eingebettet werden; und
d) Wickeln der ersten Gürtelbaueinheit (68) um den zweiten Verstärkungsgürtel (60), wobei die elastomeren Keile (72a, 72b) radial innerhalb der ersten Gürtelbaueinheit gegen den zweiten Gürtel (60) positioniert werden, um die Seitenkanten (62a, 62b) des zweiten Gürtels (60) von den Seitenkanten (70a bzw. 70b) des dritten Gürtels (69) zu beabstanden.

7. Verfahren nach Anspruch 6, das den Schritt umfasst, bei dem erste, zweite und dritte Verstärkungsgürtel (56, 60, 69) mit einem Winkel der Verstärkungskorde (13) im Gürtel zwischen 18° und 26° in Bezug auf die Äquatorialebene des Reifens gewählt werden.

8. Verfahren nach Anspruch 6, das den Schritt umfasst, bei dem die Keile (72a, 72b) bei einer Temperatur im Bereich von 77 °C bis 115 °C und bei einem Druck zwischen 9.650 und 15.170 kPa (1400 psi und 2200 psi) gespritzt und durch Profilwalzen geformt werden.

## Revendications

1. Procédé pour la construction d'un assemblage de ceintures (30) renforcées par des câblés que l'on utilise dans la construction d'un bandage pneumatique, comprenant les étapes consistant à :
a) extruder un premier coin (18a) de caoutchouc à l'état non vulcanisé :
b) déposer le premier coin (18a) de caoutchouc à l'état non vulcanisé le long d'un premier bord latéral (24a) sur une première surface (15) d'une ceinture (12) renforcée avec des câblés, ladite première surface (15) possédant une première section terminale (12a) et une deuxième section terminale (12b) espacées l'une de l'autre ; et
c) stratifier le premier coin (18a) de caoutchouc de l'état non vulcanisé le long du premier bord latéral (24a) de la ceinture (12) pour enrober le bord latéral (24a) et la première section terminale (12a) de la première surface (15) de la ceinture (12) dans le caoutchouc à l'état non vulcanisé du premier coin (18a).

2. Procédé selon la revendication 1, englobant les étapes consistant à :
d) extruder un deuxième coin (18b) de caoutchouc à l'état non vulcanisé ;
e) déposer le deuxième coin le long d'un deuxième bord latéral (24b) sur ladite première surface (15) de la ceinture (12) renforcée avec des câblés ; et
c) stratifier le deuxième coin (18b) de caoutchouc de l'état non vulcanisé le long du deuxième bord latéral (24b) de la ceinture (12) pour enrober le deuxième bord latéral (24b) et une deuxième section terminale (12b) de la première surface (15) de la ceinture (12) dans le caoutchouc à l'état non vulcanisé du deuxième coin (18b).

3. Procédé selon la revendication 2, englobant l'étape consistant à découper la matière de ceinture (12) et les premier et deuxième coins (18a, 18b) pour former un assemblage de ceintures (30) possédant deux extrémités (31a, 31b).

4. Procédé selon la revendication 3, englobant les étapes consistant à :
extruder les premier et deuxième coins (18a, 18b) de caoutchouc à l'état non vulcanisé, directement sur la ceinture (12) ; et
stratifier les premier et deuxième coins (18a, 18b) sur les premier et deuxième bords latéraux (24a, 24b) de la ceinture (12) à une température entre 77 °C et 115 °C.

5. Procédé selon la revendication 1, englobant les étapes consistant à sélectionner les câblés de renforcement (13) parmi le groupe constitué par des câblés en acier, des câblés en acier laitonné et des câblés constitués d'une matière naturelle ou synthétique.

6. Procédé de confection d'un bandage pneumatique, comprenant les étapes consistant à :
a) enrouler une première ceinture de renforcement (56) autour de la carcasse (50) du bandage pneumatique ;
b) enrouler une deuxième ceinture de renforcement (60) comportant des câblés en formant un premier angle par rapport au plan équatorial de la carcasse du bandage pneumatique ;
c) construire, conformément au procédé selon la revendication 2, un premier assemblage de ceintures (68) englobant une troisième ceinture renforcée (69), les bords latéraux (70a, 70b) et les sections terminales, espacées l'une de l'autre en direction latérale, d'une de ses surfaces, étant enrobés dans des coins élastomères (72a, 72b) ; et
d) enrouler le premier assemblage de ceintures (68) autour de la deuxième ceinture de renforcement (60), les coins élastomères (72a, 72b) étant disposés en position radiale à l'intérieur du premier assemblage de ceintures contre la deuxième ceinture (60) dans le but d'espacer les bords latéraux (62a, 62b) de la deuxième ceinture (60) par rapport aux bords latéraux (70a, 70b), respectivement de la troisième ceinture (69).

7. Procédé selon la revendication 6, englobant l'étape consistant à sélectionner des première, deuxième et troisième ceintures de renforcement (56, 60, 69) avec un angle formé par les câblés de renforcement (13) dans la ceinture entre 18 degrés et 26 degrés par rapport au plan équatorial du bandage pneumatique.

8. Procédé selon la revendication 6, englobant l'étape consistant à extruder et à stratifier les coins (72a, 72b) à une température dans la plage entre 77 °C et 115 °C et sous une pression entre 9650 et 15170 kPa (1400 psi et 2200 psi).
